(19) Europäisches Patentamt
European Patent Office
Office européen des brevets

(11) EP 1 358 946 B1

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(51) Int Cl.:
***B05D 1/02*** *(2006.01)* ***B05B 7/00*** *(2006.01)*
***C04B 41/49*** *(2006.01)*

(21) Anmeldenummer: **03009278.7**

(22) Anmeldetag: **24.04.2003**

(54) **Verfahren zur Imprägnierung von porösen mineralischen Substraten**

Process for impregnating porous inorganic substrates

Procédé pour l'imprégnation de substrats inorganiques poreuses

(84) Benannte Vertragsstaaten:
**AT BE BG CH CY CZ DE DK EE ES FI FR GB GR HU IE IT LI LU MC NL PT RO SE SI SK TR**

(30) Priorität: **26.04.2002 DE 10218871**

(43) Veröffentlichungstag der Anmeldung:
**05.11.2003 Patentblatt 2003/45**

(73) Patentinhaber: **Evonik Degussa GmbH**
**45128 Essen (DE)**

(72) Erfinder:
- **Burkhard, Standke, Dr.**
**79540 Lörrach (DE)**
- **Weissenbach, Kerstin, Dr.**
**Hillsborough, NJ 08844 (US)**
- **Kempkes, Nadja**
**79618 Rheinfelden (DE)**
- **Bartkowiak, Bernd**
**79664 Wehr-Öflingen (DE)**

(56) Entgegenhaltungen:
**EP-A- 1 193 302** **DE-A- 1 471 299**
**US-A- 5 110 684** **US-A- 5 565 032**
**US-A- 5 799 875** **US-B1- 6 197 382**

EP 1 358 946 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren und die Verwendung spezieller Sprühtechnologie zur Wasser abweisenden und gegebenenfalls Öl abweisenden und gegebenenfalls auch Schmutz und Graffiti abweisenden Imprägnierung von porösen mineralischen Substraten, insbesondere zur Behandlung von Baustoffen.

Es ist seit langem bekannt, dass poröse mineralische Substrate, d. h. Baustoffe, wie Faserzement, Beton, Sandstein, Kalkstein, Naturstein, Kunststein, Glas- und Mineralwolleartikel, Ziegel, Kunststein, Mörtel, Putz, Terrakotta, Keramik, Kalksandstein, Faserzement- sowie Mineralfaserplatten, zement- oder tongebundene Baustoffe, durch Applikation von hydrophobierenden Imprägniermittel wirksam gegen eindringende Feuchtigkeit geschützt werden können. Hierzu eignen sich eine Vielzahl von flüssigen Imprägniermittel. Im Handel befinden sich Produkte auf Basis von natürlichen und synthetischen Wachsen und Ölen von Metallseifen, wie beispielsweise Stearate, von Kunstharzen, wie beispielsweise Acrylat-, Epoxid-Alkyd- oder Polyurethanharze, von Silicium basierenden Produkten, wie Alkylalkoxysilane, Alkylalkoxysiloxane, Silicone sowie Siliconharze. Zusätzlich kann Oleophobie durch Einsatz fluorierter Produkte, wie z. B. Teflon, modifizierte Fluoralkylharze, Fluoralkylalkoxysilane, Fluoralkylalkoxysiloxane, Fluoralkylhydroxysiloxane oder Fluorsilicone, erreicht werden.

Die Vorteile derartiger Hydro- und Oleophobierungen sind in der Literatur beschrieben und dem Fachmann wohl bekannt. Die Methoden zur Beschreibung der Wirksamkeit von Hydro- und Oleophobierungen sind ebenfalls literaturbekannt. Genannt seien an dieser Stelle bezüglich der Hydrophobierung beispielsweise die Eindringtiefe und die Reduktion der Wasseraufnahme sowie bezüglich Oleophobie und Antigraffitieigenschaften der Funktionstest, beschrieben im Regelwerk für die "Bewertung von Verfahren, Technologien und Materialien zur Graffitientfernung und Graffitiprophylaxe" (ReGG) der Gütegemeinschaft Antigraffiti, Copyright 2000 by Labor Dr. Kupfer, Alt Stralau 54, 10245 Berlin.

Flüssige Imprägniermittel werden in der Regel durch Flutverfahren, wie Streichen, Sprühen, Tauchen, satt aufgetragen, beispielsweise mit Pinsel oder Rolle, mit einer Birchmeierspritze oder mit Airlessgeräten [Schriftenreihe der MBT AG, Meynadier "Bautenschutz und Instandsetzung, Teil 1: Partielle Instandsetzung und Oberflächenschutz, Heft 4 Januar 2000, ISBN 3-907075-04-8, Seiten 92, 95 und 98; "Verarbeitungshinweise für DYNASYLAN® BHN und BSM 40 %", Oktober 1995, Hüls AG; "WackerSilicone für den Denkmalschutz", April 1975, Seite 6; Dr. M. Roth in Bautenschutzmittel Sonderdruck "Anstriche und Imprägnierungen auf Naturstein", Wacker Chemie GmbH; "Wackersilicone Bautenschutzmittel", Mai 1981, Seite 10; Produktinformationen zu Wacker BS® SMK 1311, Wacker BS® 1001, Wacker BS® 1701, Wacker BS® 290, Wacker BS® Creme C, Wacker BS® 28, Wacker BS® 29 (alle von März 2001)].

Nachteilig bei solchen Flutverfahren ist, dass dabei immer so viel flüssiges Imprägniermittel aufgetragen wird, wie der Baustoff imstande ist aufzusaugen, (vgl. z. B. Schriftenreihe der MBT, Meynadier Bautenschutz mit Hydrophobieren, Heft 2, März 1999, R. Hager "Silicone für die Hydrophobierung", Seite 16). Daher muss bei stark saugfähigen Substraten das Imprägniermittel zusätzlich verdünnt werden, damit ein nicht zu hoher Produktverbrauch resultiert und darüber hinaus vermieden wird, dass das Hydrophobierergebnis lokal stark schwankt.

Wird beispielsweise ein saugfähiger Ziegel im Flutverfahren behandelt, so können Produktverbräuche von ca. 1 $l/m^2$ und mehr resultieren. Wendet man ein konzentriertes, also lösemittelfreies Produkt auf diese Weise an, so erfolgt ein unnötig hoher Produktverbrauch, welcher hohe Kosten verursacht und in manchen Fällen auch anwendungstechnisch nachteilig ist. So entsteht beispielsweise bei Produkten auf Siloxan- und Siliconharzbasis in solchen Fällen ein klebriger und unästhetischer Harzfilm an der Oberfläche. Bei gut penetrierenden Stoffen, wie monomeren Alkyltrialkoxysilanen oder kurzkettigen Alkylalkoxysiloxanen, resultiert bei derartig hohen Auftragsmengen auf saugfähigen Substraten eine Eindringtiefe von mehreren Zentimetern. Da diese Wirkstoffe teuer sind und für die erwünschte Wirkung eine Eindringtiefe im Bereich von ca. 1 cm in der Regel ausreichend ist, werden Lösemittel zur Verdünnung der wertvollen Wirkstoffe verwendet. Das kann einerseits Wasser im Fall von Emulsionssystemen oder Alkohole bzw. Benzinkohlenwasserstoffe im Fall von lösemittelbasierenden Systemen sein. Nachteilig ist allerdings, dass Lösemittel in die Atmosphäre gelangen bzw. dass manche Baustoffe lange Trocknungszeiten zeigen, wenn wasserbasierende Produkte verwendet werden, was sich insbesondere bei der werksseitigen Hydrophobierung von beispielsweise Faserzementplatten nachteilig auswirkt, da im Herstellprozess ein zusätzlicher Trocknungsschritt erfolgt.

Auch wird in der Regel empfohlen, flüssige Imprägniermittel mehrfach nass in nass aufzutragen, um einen möglichst gleichmäßigen Produktauftrag zu erreichen. So wird beispielsweise in der Hüls-Broschüre zum Bautenschutz unter "Verarbeitungshinweise für DYNASYLAN® BHN und BSM 40 % empfohlen, dass an senkrechten Flächen ein 30 bis 50 cm langer, flüssig spiegelnder Ablaufvorhang sichtbar sein soll. An kleineren Flächen kann auch zur Erreichung dieses Effekts aus einer Kanne gegen die vertikale Fläche gegossen werden.

Aus US 5 565 032 ist eine Vorrichtung bekannt, mit deren Hilfe man eine Flüssigkeit unzerstäubt auf die Oberfläche einer porösen Struktur aufbringt und die so aufgebrachte Flüssigkeit gleichzeitig durch einen oder mehrere starke, gerichtete Pressluftströme auf der Substratoberfläche intensiv verteilt.

Daraus ergibt sich eine Verfahren zur Imprägnierung poröser mineralischer Substrate durch Sprühtechnik, in dem man ein gasgestütztes Sprühaggregat einsetzt, welches aus (i) einem Düsensystem, (ii) einer Gaskomprimiereinheit

und einer Regulierungseinheit für den Gasdruck bzw. die Gasmenge und (iii) einer Bevorratungseinheit für ein flüssiges Imprägniermittel und einer Flüssigkeitsfördereinheit sowie -reguliereinheit besteht, wobei eine Verbindung von (ii) nach (i) zur Gasförderung und von (iii) nach (i) eine Verbindung zur Versorgung des Düsensystems mit Flüssigkeit bestehen, man in der Einheit (ii) als Gas Luft verwendet und man das gasgestützte Sprühaggregat in einem Druckbereich von 2 bar Überdruck gegen Atmosphärendruck betreibt.

DE-OS 14 71 299 offenbart eine mittels Treibgas, u. a. sind FCKWs genannt, getriebene Handsprühdose für die Behandlung von Bauteilen mit einem versprühbaren Behandlungsmittel.

Ein Vernebeln der Imprägnierflüssigkeit unter hohem Druck, wie es beispielsweise in der Airlesstechnik und auch bei Birchmeierspritzen erreicht wird, sollte vermieden werden, da die gebildeten Aerosoltröpfchen einerseits gesundheitlich bedenklich sind und andererseits durch Verdunstung und Overspray erhebliche Produktverluste auftreten können. Bei der Airlesstechnik wird in der Regel mit Düseninnendrücken > 2 bar gearbeitet. So wird im Lackierbereich die Airlesstechnik üblicherweise im Druckbereich von 7 bis 14 bar eingesetzt, wobei sehr feine Sprühnebel erzeugt werden.

Saugfähige Substrate, wie manche Natursteine, z. B. Euville oder Savonniers, oder auch Faserzementbauteile oder Mineralfaserdämmplatten, weisen eine so hohe Porosität auf, dass dabei ein Materialverbrauch von mehreren kg pro Quadratmeter resultiert, insbesondere wenn man das empfohlene zweimalige Flutverfahren anwendet. Um den Wirkstoffgehalt in solchen Fällen zu kontrollieren, wird mit verdünnten Lösungen oder verdünnten Emulsionen gearbeitet. Dies hat den Nachteil, dass entweder Lösemittel verwendet werden müssen oder aufwendig die Wirkstoffe zu Wasser verdünnbaren Emulsionen verarbeitet werden müssen.

Bei der werksseitigen Imprägnierung von Fertigbauteilen ist die Verwendung von Lösemitteln besonders nachteilig, da durch den Verdunstungsprozess im Fall organischer Lösemittel explosive Gemische mit Luft entstehen können und im Fall von Wasser als Lösemittel (Emulsionen) lange Trocknungszeiten in Kauf genommen werden müssen. Die Verwendung von Lösemitteln bei der Hydrophobierung von z. B. bestehenden Fassaden ist zudem ökologisch sehr nachteilig.

Auch bei der Antigraffitiimprägnierung wird das Flutverfahren satt angewendet.

Ein verbessertes mehrstufiges Verfahren für Antigraffitiimprägnierungen wird in EP 1 193 302 offenbart. Der erste Auftrag des Antigraffitiimprägniermittels erfolgt dabei aus verdünnter Lösung, um den Produktverbrauch zu kontrollieren. Weitere Auftragungen erfolgen mittels einem einer Birchmeierspritze äquivalenten Gerät (Gloria Sprühgerät, Betriebsdruck 3 bar). Nachteilig ist hier, dass der erste Produktauftrag aus verdünnter Lösung erfolgt, was erhöhten Arbeitsaufwand und höhere Trocknungszeiten verursacht und ab dem zweiten Applikationsgang die entstehenden Sprühnebel Probleme bereiten können sowie die Notwendigkeit, dass offenbar bedingt durch leicht ungleichmäßigen Materialauftrag, eine mechanische Nachbearbeitung erforderlich ist, was zu einem höheren Materialverbrauch und zu längeren Wartezeiten zwischen dem Auftrag der einzelnen Schichten führen kann.

Es ist bekannt, dass die luftgestützte HVLP- bzw. LVLP-Sprühtechnik (high volume low pressure bzw. low volume low pressure) für Lackiertechniken eingesetzt wird.

Es bestand daher die Aufgabe, eine weitere, möglichst wirtschaftliche und gleichzeitig effektive Möglichkeit zur Imprägnierung für poröse mineralische Substrate bereitzustellen. Insbesondere bestand das Anliegen, auch stark poröse Materialien möglichst wirtschaftlich ohne Verdünnung des Wirkstoffs weitgehend homogen zu imprägnieren sowie einen verbesserten Materialauftrag von Antigraffitiimprägnierungen erlaubt.

Die gestellte Aufgabe wird erfindungsgemäß entsprechend den Angaben der Patentansprüche gelöst.

Überraschenderweise wurde gefunden, dass man zur hydro-, oleophobierenden und/oder Schmutz abweisenden Imprägnierung poröser mineralischer Substrate, insbesondere stark poröser Baustoffe, die HVLP- (high volume low pressure) bzw. LVLP-Technik (low volume low pressure), in besonders vorteilhafter Weise, da besonders wirtschaftlich bei ausgezeichneten Imprägnierergebnissen und hoher Umwettverträgtichkeit sowie einfacher und sicherer Handhabung, verwenden kann. Die mit Druckluft arbeitenden Sprühaggregate bieten bei der Anwendung, insbesondere für Baustoffanwendungen, gegenüber nicht luftgestützter Sprühtechnik (Airlessverfahren) den Vorteil, weniger so genanntes Overspray zu bewirken. Demgegenüber erfolgt bei der Airlesstechnik durch hohen Rückprall der Flüssigkeitströpfchen hohes Abströmen von Flüssigkeit, wodurch ein erhöhter Materialverbrauch entsteht. Der geringe Zerstäubungsdruck beim vorliegenden Verfahren von weniger als 2 bar führt zusätzlich zu einer deutlich geringeren Spritznebelentwicklung. Wie in den vorliegenden Beispielen gezeigt wird, wirkt sich dies überraschenderweise auch positiv bei Imprägnierungen poröser Materialien aus. Besonders überraschend ist die Tatsache, dass bei Verwendung der gasgestützten Sprühtechnik weitgehend auf Lösemittel verzichtet werden kann und die reinen Wirksubstanzen, so weit sie flüssig bis hochviskos sind, direkt appliziert werden können. Poröse Materialien, welche im Flutverfahren in einem Arbeitsgang mehr als 100 ml Imprägniermittel aufsaugen, erfordern bisher den Einsatz verdünnter Imprägniermittel. Durch das vorliegende Verfahren können insbesondere bei solchen Substraten im Wesentlichen unverdünnte, flüssige Imprägnierwirkstoffe eingesetzt werden. Man kann aber auch verdünnte oder emulgierte Wirtstoffsysteme beim vorliegenden Verfahren einsetzen. Ein weiterer, überraschender Vorteil des vorliegenden Verfahrens gegenüber der Airlesstechniken zeigt sich bei Antigraffitiimprägnierungen mit flüssigen Wirkstoffen, wie sie beispielsweise in EP 1 101 787 beschrieben werden

und deren verbesserte Applikation in EP 1 193 302 geschildert ist. Mit der erfindungsgemäßen Technik kann mit Hinblick auf die Einsparung von Material auf das Verdünnen der Imprägnierlösungen für die Erstimprägnierung verzichtet werden. Weiterhin können die Folgeimprägnierungen, die für eine einwandfreie Antigraffitiperformance benötigt werden, homogener und mit weniger Aufwand aufgetragen werden. Zusätzlich sind die Wartezeiten zwischen den Imprägnierschritten bei der neuen, verbesserten Technik deutlich kürzer.

Gegenstand der vorliegenden Erfindung ist somit ein Verfahren zur Imprägnierung poröser, mineralischer Substrate wie in Anspruch 1 definiert. Dadurch kann man vorteilhaft in kontrollierter Weise flüssiges Imprägniermittel auf die Oberfläche poröser mineralischer Substrate in einer Verbrauchsmenge aufbringen, welche die Verbrauchsmenge bei herkömmlicher Auftragsmethode durch Flutverfahren deutlich unterschreitet.

So verwendet man bei der Durchführung des erfindungsgemäßen Verfahrens ein gasgestütztes Sprühaggregat, welches im Wesentlichen aus (i) einem Düsensystem, (ii) einer Gaskomprimiereinheit einschließlich einer Regulierungseinheit für den Gasdruck bzw. die Gasmenge und (iii) einer Bevorratungseinheit für ein flüssiges Imprägniermittel, gegebenenfalls einschließlich einer Flüssigkeitsfördereinheit sowie- reguliereinheit, besteht, wobei eine Verbindung von (ii) nach (i) zur Gasförderung und von (iii) nach (i) eine Verbindung zur Versorgung des Düsensystems mit Flüssigkeit bestehen.

So werden luftgestützte Sprühaggregate der so genannten HVLP- bzw. LVLP-Technik (US 5 799 875, US 5 064 119, US 4 744 518, US 4 759 502, US 5 050 804) beim erfindungsgemäßen Verfahren verwendet, wie sie beispielsweise von den Firmen Sata, Optima, Devilbiss, Elektra Beckum, Elmag, Graco und Walter Pilot angeboten werden.

Somit ist auch Gegenstand der vorliegenden Erfindung die Verwendung gemäß Anspruch 37.

Bei dem erfindungsgemäßen Verfahren haben sich insbesondere Sprühgeräte bewährt, welche über ein Düsensystem betrieben werden, wobei im Gegensatz zur Airlesstechnik komprimierte Luft in das Düsensystem eingespeist wird. Das Düsensystem kann aus einer oder mehreren Düsen bestehen und gegebenenfalls auch automatisiert über die zu imprägnierende Oberfläche geführt werden.

Der Düseninnendruck beträgt bei dem erfindungsgemäßen Verfahren bevorzugt weniger als 2 bar ü., besonders bevorzugt weniger als 1 bar ü., und ganz besonders bevorzugt weniger als 0,7 bar ü., um unerwünschte Sprühnebel, die in der Regel zu Produktverlusten führen und auch arbeitssicherheitstechnisch ein Risiko darstellen können, weitestgehend zu vermeiden.

Erfindungsgemäß werden gasgestützte Sprühaggregate mit einem Überdruck gegenüber dem Atmosphärendruck von 0,05 bis $\leq$ 2 bar betrieben.

Bei flüssigen Imprägniermitteln im Viskositätsbereich von 0,5 bis 150 000 mPa s werden vorzugsweise Sprühdüsen mit einem Durchmesser von weniger als 4 mm eingesetzt, besonders bevorzugt werden Düsendurchmesser von 0,5 bis 3,5 mm, ganz besonders bevorzugt Düsendurchmesser von 0,7 bis 3 mm, eingesetzt.

Flüssigkeits- und Luftdurchsatz sind geeigneterweise über unterschiedliche, unabhängige Ventile einstellbar. Besonders bevorzugt wird zur Regulierung des Flüssigkeitsstroms ein Nadelventil im Düsensystem eingesetzt. Der Luftstrom wird bevorzugt über einen separaten Kompressor erzeugt. Der Kompressor besitzt geeigneterweise eine variable Förderleistung, wenn keine Möglichkeit an der Spritzdüse besteht, den Luftstrom einzuregeln. Besteht diese Möglichkeit, so können auch Kompressoren mit konstanter Förderleistung verwendet werden. Die Förderleistung sollte pro Düse > 100 l/min, bevorzugt > 1 000 l/min, und besonders bevorzugt > 2 500 l/min, betragen.

Als Imprägnierstoffe können alle an sich bekannten flüssigen Hydrophobier- und Oleophobiermittel bei dem erfindungsgemäßen Verfahren - hier sind auch wie auch immer verdünnte Lösungen von Silanen, Siloxanen und Siliconen sowie Siliciumverbindungen enthaltende Emulsionen einzuschließen - verwendet werden.

Besonders vorteilhaft werden allerdings Imprägnierstoffe auf Siliciumbasis verwendet, wie beispielsweise organofunktionelle Silane, Siloxane, Silicone, Siliconharze oder Siliconate, insbesondere für einen ersten Applikationsgang nach dem erfindungsgemäßen Verfahren. Bei weiteren Applikationsgängen, d. h. Folgeimprägnierungen, bei denen ein weiterer Sprühvorgang auf den Vorhergehenden folgt, kann man aber auch auf Siliciumverbindungen basierende Lösungen in organischen Lösemitteln oder Wasser oder deren niedrig- oder auch hochviskose wässrige Emulsionen (Öl in Wasser oder auch Wasser in Öl), einsetzen.

Ganz besonders eignen sich monomere Silane der allgemeinen Formel I

$$R^1\text{-Si}(R^2)_a(OR^3)_{3-a} \qquad \text{(I)},$$

worin $R^1$ und $R^2$ gleich oder verschieden sind und jeweils eine lineare oder verzweigte Alkylgruppe mit 1 bis 20 C-Atomen, die gegebenenfalls teilweise oder vollständig mit Halogen, insbesondere Fluor, substituiert ist, oder eine Arylgruppe oder Aralkylgruppe mit linearer oder verzweigter Alkylkette darstellt, vorzugsweise n-Propyl, i-Propyl, n-Butyl, i-Butyl, n-Octyl, i-Octyl, 1,1,2,2-Tetrahydrotridecafluoroctyl, $R^3$ für eine Methyl-, Ethyl-, n-Propyl-, i-Propyl-, n-Butyl, i-Butyl- oder t-Butylgruppe steht und a gleich 0, 1 oder 2 ist,
als Wirkstoff bzw. Imprägniermittel für den Einsatz beim erfindungsgemäßen Verfahren.

Beispielhaft erwähnt seien hier insbesondere folgende Silanwirkstoffe: n-Propyltrimethoxysilan, n-Propyltriethoxysilan, n-Butyltrimethoxysilan, n-Butyltriethoxysilan, i-Butyltrimethoxysilan, i-Butyltriethoxysilan, n-Hexyltrimethoxysilan, n-Hexyltriethoxysilan, i-Hexyltrimethoxysilan, i-Hexyltriethoxysilan, n-Octyltrimethoxysilan, n-Octyltriethoxysilan, i-Octyltrimethoxysilan, i-Octyltriethoxysilan, Chlorpropyltrimethoxysilan, Chlorpropyltriethoxysilan, 1,1,2,2-Tetrahydrotridecafluoroctyltrimethoxysilan, 1,1,2,2-Tetrahydrotridecafluoroctyltriethoxysilan.

Beim erfindungsgemäßen Verfahren können natürlich auch Silangemische oder Partialhydrolysate aus den aufgezählten Silanen gemäß Formel I oder diese in Mischung mit den monomeren Organosilanen als Wirkstoff bzw. Imprägniermittel eingesetzt werden. Zudem können Siloxangemische, wie sie beispielsweise in EP 0 814 110 und in EP 1 205 481 beschrieben werden, eingesetzt werden. So sind aus EP 0 814 110 Oligomerengemische kondensierter Alkylalkoxysilane zu entnehmen, die man für die Hydrohobierung von mineralischen Oberflächen verwenden kann. Weiter ist EP 1 205 481 A2 ein Oligomerengemisch von n-Propylethoxysiloxanen zu entnehmen, das man u. a. für die Behandlung von anorganischen Oberflächen zur Wasser, Öl, Schmutz bzw. Farbe abweisenden Ausstattung verwenden kann. Als oleophobe Komponenten oder auch allein können allgemein flüssige Fluorpolymere bevorzugt mit reaktiven Gruppen, die eine Wechselwirkung mit der Substratoberfläche erlauben, oder gelöste Fluorpolymere, Fluorsilicone oder auch Systeme, wie sie in EP 1 101 787 beschrieben sind, eingesetzt werden. So kann man aus EP 1 101 787 A2 triamino- und fluoralkylfunktionelle Organosiloxane sowie deren Gemische sowie entsprechende Zusammensetzungen, die man u. a. für die Hydrophobierung und/oder Oleophobierung von Oberflächen, für "Antigraffiti"-Anwendungen sowie für "Easy-to-clean"-Anwendungen einsetzen kann. Ein Verfahren zur Anwendung solcher triamino- und fluoralkylfunktioneller Organosiloxane für die Erzeugung einer Farbe, Lack, Schadstoffe, Bioorganismen, Öl, Wasser und/oder Schmutz abweisenden Schicht auf einem Substrat ist aus EP 1 193 302 A2 zu entnehmen. So wird bezüglich der zuvor genannten EP-Schutzrechte im Detail auf die Offenbarung der jeweiligen Ansprüche, die diesbezügliche Teile der Beschreibung sowie die jeweiligen Beispiele hingewiesen.

Als Siliconimprägniermittel kann man beim vorliegenden Verfahren beispielsweise auch Methylsiloxane oder Methylsiliconharze oder entsprechende Gemische genannter Imprägniermittel einsetzen.

Bevorzugt werden beim erfindungsgemäßen Verfahren Imprägniermittel im Viskositätsbereich von 0,5 bis 150 000 mPa s, besonders bevorzugt im Bereich von 0,65 bis 1 000 mPa s, ganz besonders bevorzugt im Viskositätsbereich von 0,65 bis 100 mPa s, eingesetzt.

Vorzugsweise werden die Wirkstoffe unverdünnt und lösemittelfrei eingesetzt. Sie können aber auch, wenn es erforderlich ist, z. B. wenn der reine Wirkstoff nicht verfügbar oder nicht flüssig ist oder eine zu hohe Viskosität aufweist oder bei Folgeimprägnierschritten, in Lösung oder als wässrige Emulsion eingesetzt werden.

Als Substrate eignen sich in der Regel alle porösen mineralischen Untergründe, besonders aber solche, die im trockenen Zustand mehr als 200 g/$m^2$, ganz besonders bevorzugt solche, die mehr als 300 g/$m^2$ Wasser aufnehmen können, wobei man zur Feststellung des Wasseraufnahmevermögens in der Regel entsprechende Probestücke im Trockenschrank vor Kondition wiegt, sie 1 Mal für 5 Sekunden unter Wasser taucht und die Gewichtszunahme feststellt.

Die Menge an Imprägniermittel, die man erfindungsgemäß pro Sprühgang bevorzugt aufträgt, beträgt 1 bis 200 g/$m^2$, besonders bevorzugt sind 1 bis 100 g/$m^2$, ganz besonders bevorzugt 5 bis 75 g/$m^2$. Bei Imprägnierungen zur Hydrophobierung reicht in der Regel ein Applikationsgang. Man kann den erfindungsgemäßen Sprühvorgang aber auch mehrfach hintereinander durchführen, vorzugsweise zweimal, dreimal, viermal, bis hin zu zehnmal in Folge oder noch häufiger. So können Antigraffitibeschichtungen, insbesondere wenn sie mit Produkten, wie sie in EP 1 101 787 beschrieben sind, ausgeführt werden, mehrere Sprüh- bzw. Imprägniergänge erfordern, wobei die Folgeimprägnierung auf die vorangegangene erfolgen kann, wenn die vorangegangene Imprägnierung noch nicht abgetrocknet ist (nass in nass).

Es ist aber auch möglich, die vorangegangene Imprägnierung antrocknen zu lassen, bevor mit der nächsten Imprägnierung begonnen wird. Die besprühten Substratoberflächen können mechanisch leicht nachbehandelt werden, z. B. mit einem Pinsel oder einem Lappen, um eine noch homogenere Flüssigkeitsverteilung an der Oberfläche zu bewirken. Eine Nachbehandlung ist üblicherweise jedoch nicht notwendig.

Das erfindungsgemäße Verfahren unterscheidet sich von den bisher für den Bautenschutz eingesetzten Sprühverfahren insbesondere dadurch, dass man unter Verwendung eines gasgestützten Sprühaggregats durch einen vorwiegend gerichteten Luftstrom feine Imprägniermitteltröpfchen wohl dosiert und weitgehend gerichtet auf die Substratoberfläche erhält, d. h. hierbei entsteht kein Aerosolnebel mit all seinen Nachteilen, wie er durch Airlesssprüheinheiten mit hohem Druck erzeugt wird, auch treten hierbei die hohen Produktverbräuche nichtauf, wie sie beobachtet werden, wenn im Flurverfahren mit Airlesstechnologie bei niedrigem Druck gearbeitet wird.

So wurde gefunden, dass unter bestimmten Bedingungen das erfindungsgemäße Sprühverfahren besondere Vorteile bei der Ausführung von Imprägnierungen liefert, obgleich diese Technik sehr feine Sprühtröpfchen liefert und feine Sprühnebel nach gängiger Lehrmeinung bei der Ausführung von Imprägnierungen, wie beispielsweise der hydrophobierenden Imprägnierung von Baustoffen mit silan-, siloxan- oder siliconbasierenden Imprägniermitteln, vermieden werden sollten. Die erfindungsgemäße Verwendung der LVLP- bzw. HVLP-Technik ermöglicht so z. B. eine überraschend gleichmäßige Applikation von flüssigen Imprägniermitteln selbst bei geringsten Auftragsmengen unter 60 g/$m^2$ auf hochporösen Substraten, wie manchen Natursteinen, z. B. Savonniers, Euville etc., oder hochporösen Faserzementplatten und Mineralfaserplatten, wie man sie beispielsweise im Fassadenbau, im Brandschutz und im Deckenbau einsetzen

kann. Die Wirksamkeit der erfindungsgemäßen Imprägnierungen, insbesondere validiert durch Eindringtiefe und Reduktion der Wasseraufnahme bzw. bei Antigraffitibeschichtungen durch den Funktionstest, ist trotz geringster Produktverbräuche überraschenderweise vergleichbar und sogar besser als diejenige, welche mit konventioneller Technik, wie dem Flutverfahren, erreicht wird. Ferner gewährleistet das erfindungsgemäße Verfahren eine punktgenaue Applizierbarkeit, wodurch auf aufwendige und kostspielige Abdeckarbeiten verzichtet werden kann und Produktverluste praktisch nicht vorkommen. Die erfindungsgemäße Imprägniertechnik ermöglicht auch die Verwendung im Wesentlichen lösemittelfreier Konzentrate, wo bei konventioneller Technik im Flutverfahren mit Lösemittel verdünnte Produkte oder mit Wasser verdünnbare Emulsionen zum Einsatz kommen müssen, um den Wirkstoffverbrauch kontrollieren zu können. Das erfindungsgemäße Verfahren ermöglicht daher weitgehend einen Verzicht auf Lösemittel und macht ebenfalls den Einsatz aufwendiger Emulgiertechnologie vermeidbar. Dadurch bringt das erfindungsgemäße Verfahren für den Bautenschutz erhebliche ökologische, toxikologische und auch ökonomische Vorteile.

Die vorliegende Erfindung wird durch die folgenden Beispiele und Vergleichsbeispiele näher erläutert.

## Beispiele

Die in den Beispielen genannten Prüfmethoden sind für den Bautenschutz üblich und im Folgenden näher erläutert:

(1) Bestimmung Reduktion der Wasseraufnahme

Die Vorschrift beschreibt die Prüfung der Hydrophobierungsqualität an mineralischen Baustoffen. Durch Unterwasserlagerung einer hydrophobierten Probe wird die Wasseraufnahme und durch Vergleich der Wasseraufnahme mit einer Referenzprobe (unbehandelte Probe) die Reduktion der Wasseraufnahme der hydrophobierten Probe ermittelt.

Zur Bestimmung der Wasseraufnahme werden die behandelten und unbehandelten Probekörper in VE-Wasser gelagert (Unterwasserlagerung). Hierzu kommen behandelte und unbehandelte Proben getrennt in mit VE-Wasser befüllte Wannen. Der Wasserstand soll ca. 1 cm über den Probekörpern stehen.

Nach 24 Stunden Unterwasserlagerung wird die Gewichtszunahme durch Wägung auf 0,1 g genau bestimmt. Vor jeder Wägung wird oberflächlich anhaftendes Wasser mit Zellstoff abgetupft.

Im Prüfbericht sind folgende Angaben sowohl über den hydrophobierten Probekörper als auch über die Referenzprobe zu machen:

1. Gewicht vor der Wasserlagerung in g
2. Gewicht nach 24 Stunden Wasserlagerung in g
3. Gewichtsdifferenz in g
4. Wasseraufnahme in abs. %, bezogen auf das Anfangsgewicht des Probekörpers
5. Wasseraufnahme in rel. %, bezogen auf die unbehandelten Proben
6. Reduktion der Wasseraufnahme in %

(2) Bestimmung Eindringtiefe

Die Methode dient zur Ermittlung der Eindringtiefe von Imprägniermitteln in mineralische Baustoffe.

Zur Bestimmung der Eindringtiefe werden die behandelten Probekörper in zwei Teile gebrochen und die Bruchflächen jeweils mit einem wässrigen Farbsystem benetzt. Die nicht imprägnierte Zone wird gefärbt, während die imprägnierte Zone farblos bleibt. Gemessen wird die Breite von der behandelten Oberfläche bis zur Farbgrenzfläche an acht verschiedenen Stellen des Probekörpers. Hieraus wird jeweils ein Mittelwert der Eindringtiefe (in mm) errechnet.

(3) Der Antigraffiti-Funktionstest ist detailliert beschrieben in Regelwerk für die Bewertung von Verfahren, Technologien und Materialien zur Graffitientfernung und Graffitiprophylaxe [ReGG] der Gütegemeinschaft Antigraffiti, Copyright 2000 by Labor Dr. Kupfer, Alt Stralau 54, 10245 Berlin.

Der in den Beispielen angewandte Test lehnt sich an obige Prüfvorschrift an und wird folgendermaßen ausgeführt:

Als Prüffarben werden verwendet:

| | | |
|---|---|---|
| 1. | Edding AG Ahrensburg | Edding 800 Permanent Marker schwarz |
| 2. | Dupli-Color | Acryl-Lack RAL 3000 feuerrot |
| 3. | Hagebau (Baumarkt) | Alkyd-Lack Sprühlack Hochglanz fuchsiapink |
| 4. | Toom (Baumarkt) | Genius Pro Aqua Buntsprühlack hochglänzend enzianblau |
| 5. | MZZE Hip Hop Mailorder | On The Run superfresh Color Marker blau |
| 6. | MZZE Hip Hop Mailorder | Molotow XXL Classic Ostergelb |
| 7. | MZZE Hip Hop Mailorder | Molotow XXL Classic Chrom |
| 8. | MZZE Hip Hop Mailorder | Molotow XXL Devil Colors Pechschwarz |

(fortgesetzt)

| | | |
|---|---|---|
| 9. | MZZE Hip Hop Mailorder | Molotow XXL Classic Ultramarinblau |
| 10. | MZZE Hip Hop Mailorder | Covers All Bitumen kombination schwarz |

Durchführung:
Die Baumaterialien, z. B. Beton, Sandstein, Klinker etc., werden mit einem Graffitischutz ausgerüstet. Es ist zwingend vorgeschrieben, jeweils eine Blindprobe (Baustoff ohne Graffitischutz) pro verwendeten Baustoff zum Vergleich zu erstellen.
Nach einer angemessenen Abbindezeit werden die Farben für den Funktionstest aufgebracht. Die Farben werden 7 Tage bei Raumtemperatur zum Trocknen im Labor belassen.
Mit einem innerhalb des Tests gleich bleibenden Reiniger (ggf. -system) wird die Oberfläche gereinigt. Hierzu wird das Reinigungsmittel aufgebracht und nach einer Einwirkzeit von ca. 15 bis 20 Minuten mit einem Hochdruckreiniger (50 bar, unbeheizt) entfernt. Diese Prozedur wird bei noch zu erkennenden Farbresten auf der Substratoberfläche nach 2 bis 3 Stunden Trocknung (Raumtemperatur) der Steine noch einmal wiederholt.
Beurteilung des Prüfergebnisses:
Als Testergebnis wird die visuelle Beurteilung, unterstützt durch die fotografische Dokumentation des Reinigungserfolgs, festgehalten.
Die visuelle Beurteilung des Reinigungsergebnisses erfolgt wie folgt:

Entfernung 0 bis 30 % (keine wesentliche Farbentfernung): 1 Punkt
Entfernung 30 bis 75 % (teilweise Farbentfernung, farbiger Umriss deutlich erkennbar): 2 Punkte
Entfernung 75 bis 90 % (größtenteils Farbentfernung, umrissener Schatten erkennbar): 3 Punkte
Entfernung > 90 % (wirksame Farbentfernung, umrissener blasser Schatten erkennbar): 4 Punkte
Restlose Farbentfernung (einzelne Farbpigmente in Poren sind erlaubt):

5 Punkte
Testergebnis Funktionstest:
Nach der Reinigung wird mittels der visuellen Beurteilung jedes einzelnen Farbpunktes der Ci-Wert ermittelt. Dieser wird wie folgt errechnet:

$$\text{Ci-Wert} = (\text{Punktzahl der einzelnen Farbpunkte addieren} \times 20) / (\text{Anzahl der Farbpunkte})$$

$$\text{Ci-Wert max.} = 100$$

HVLP - Sprühgerät:
Bei dem in den Beispielen verwendeten HVLP-Sprühgerät handelt es sich um ein handelsübliches Gerät der Fuji Industrial Spray Equipment Ltd. Toronto Ontario Canada mit der internen Produktbezeichnung "The Fuji Super System uses the Ametek-Lamb Electric 3-stage turbine motor type # 116765". Es wurde bei der Ausführung der Beispiele eine Sprühdüse mit 1 mm Durchmesser verwendet. Der Kompressor wurde mit einer Förderleistung von ca. 2 850 l/min bei einem Überdruck von ca. 0,5 bar betrieben.

**Beispiel 1 (Vergleichsbeispiel)**

Hydrophobierung von Faserzement mit einem lösemittelfreien 100-%-System (Isobutyltriethoxysilan) durch Tauchen

Das Imprägniermittel als nicht verdünntes, so genanntes "100-%-System" ist ein Isobutyltriethoxysilan mit einer handelsüblichen Reinheit von ≥ 98 Gew.-%.
Eine 11 mm starke Fassadenplatte der Fa. Plycem für den Außenbereich aus Faserzement mit den Abmessungen 10 x 15 cm (entsprechend 0,015 $m^2$) wurde 2 Mal 5 Sekunden mit der Außenseite in eine Mischung aus 99 Gew.-% Isobutyltriethoxysilan und 1 % Tetrabutyltitanat (Katalysator) in einer Weise getaucht, dass die zu imprägnierende Platte ca. 1 mm tief in die Flüssigkeit eintaucht. Die aufgesogene Flüssigkeit wurde mit 14,48 g (entsprechend ca. 965 $g/m^2$) durch Wägung bestimmt. Nach 2 Wochen Lagerzeit im Labor (Reaktionszeit) wurden Wasseraufnahme und Eindringtiefe des Imprägniermittels im Vergleich zu einer nicht behandelten Platte bestimmt.

Die Reduktion der Wasseraufnahme betrug 88 %, die Platte war durchimprägniert.

**Beispiel 2 (Vergleichsbeispiel)**

Hydrophobierung von Faserzement mit einem Silansystem mit 10 % Wirkstoffgehalt (10 % der Imprägnierlösung aus Beispiel 1 verdünnt in wasserfreiem Ethanol) durch Tauchen

Eine 11 mm starke Fassadenplatte der Fa. Plycem für den Außenbereich aus Faserzement mit den Abmessungen 10 x 15 cm (entsprechend 0,015 $m^2$) wurde 2 Mal 5 Sekunden mit der Außenseite in eine Mischung aus 99 Gew.-% Isobutyltriethoxysilan und 1 % Tetrabutyltitanat (Katalysator) in einer Weise getaucht, dass die zu imprägnierende Platte ca. 1 mm tief in die Flüssigkeit eintaucht. Die aufgesogene Flüssigkeit wurde mit 15,1 g (entsprechend ca. 1007 $g/m^2$, entsprechend einem Wirkstoffverbrauch von ca. 100,7 $g/m^2$) durch Wägung bestimmt. Nach 2 Wochen Lagerzeit im Labor (Reaktionszeit) wurden Wasseraufnahme und Eindringtiefe des Imprägniermittels im Vergleich zu einer nicht behandelten Platte bestimmt.

Die Reduktion der Wasseraufnahme betrug ca. 81 %, die Platte zeigte eine Eindringtiefe des Imprägniermittels von ca. 2 mm.

**Beispiel 3 (Vergleichsbeispiel)**

Hydrophobierung von Faserzement mit einem lösemittelfreien 100-%-System (Isobutyltriethoxysilan) mittels simuliertem Flutverfahren

Eine 11 mm starke Fassadenplatte der Fa. Plycem für den Außenbereich aus Faserzement mit den Abmessungen 10 x 15 cm (entsprechend 0,015 $m^2$) wurde senkrecht aufgestellt. Anschließend wurde mit einer Pipette das Imprägniermittel aus Beispiel 1 solange von oben auf die Platte aufgetragen, bis ein glänzender Flüssigkeitsfilm an der Oberfläche entstand. 10,5 g (entsprechend ca. 700 $g/m^2$) durch Wägung bestimmt. Anschließend wurden die nicht imprägnierten Flächen der Platte mit einem wasserdichten Epoxidharzlack beschichtet. Nach 2 Wochen Lagerzeit im Labor (Reaktionszeit) wurden Wasseraufnahme und Eindringtiefe des Imprägniermittels im Vergleich zu einer nicht behandelten Platte bestimmt.

Die Reduktion der Wasseraufnahme betrug 89 %, die Platte war durchimprägniert.

**Beispiel 4 (Vergleichsbeispiel)**

Hydrophobierung von Faserzement mit einem lösemittelfreien 100-%-System (Isobutyltriethoxysilan) durch Airlesssprühen

Eine 11 mm starke Fassadenplatte der Fa. Plycem für den Außenbereich aus Faserzement mit den Abmessungen 10 x 15 cm (entsprechend 0,015 $m^2$) wurde mittels einem Birchmeierspritzgerät entsprechenden Sprühapparat (Gloria Feinsprüher Floretta Kombi) in einer Weise mit dem Imprägniermittel aus Beispiel 1 besprüht, dass eine flüssigkeitsglänzende Oberfläche sichtbar war. Der Produktverbrauch wurde mit 9,65 g (entsprechend ca. 643 $g/m^2$) durch Wägung bestimmt. Nach 2 Wochen Lagerzeit im Labor (Reaktionszeit) wurden Wasseraufnahme und Eindringtiefe des Imprägniermittels im Vergleich zu einer nicht behandelten Platte bestimmt.

Die Reduktion der Wasseraufnahme betrug 88 %, die Platte war durchimprägniert.

**Beispiel 5**

Hydrophobierung von Faserzement mit einem lösemittelfreien 100-%-System (Isobutyltriethoxysilan) durch Anwendung luftgestützter Sprühtechnik

Eine 11 mm starke Fassadenplatte für den Außenbereich aus Faserzement mit den Abmessungen 10 x 15 cm (entsprechend 0,015 $m^2$) wurde mittels HVLP-Gerät mit dem Imprägniermittel (Isobutyltriethoxysilan) aus Beispiel 1 einmal besprüht. Der Produktverbrauch wurde am Feinregulierventil so eingestellt, dass die Platte ca. 0,71 g des Imprägniermittels aufgenommen hatte, was einem Produktverbrauch von nur ca. 47 $g/m^2$ entspricht. Nach 2 Wochen Lagerzeit im Labor (Reaktionszeit) wurden Wasseraufnahme und Eindringtiefe des Imprägniermittels im Vergleich zu einer nicht behandelten Platte bestimmt.

Die Reduktion der Wasseraufnahme betrug ca. 90 %, die Platte wies eine Eindringtiefe von ca. 2 mm auf.

## Beispiel 5a

Hydrophobierung von Faserzement mit einem organosiloxanhaltigen 100-%-System durch Anwendung luftgestützter Sprühtechnik

Eine 11 mm starke Fassadenplatte der Fa. Plycem für den Außenbereich aus Faserzement mit den Abmessungen 10 x 15 cm (entsprechend 0,015 $m^2$) wurde mittels HVLP-Gerät mit einem Imprägniermittel folgender Zusammensetzung besprüht:

98 Gew.-% Propylethoxysiloxan entsprechend EP 1 205 481 gemäß Beispiel 1
1 % Dibutylzinndilaurat (Katalysator)
1 % Aerosil R202 (Abperlhilfsmittel).

Der Produktverbrauch wurde am Feinregulierventil so eingestellt, dass die Platte ca. 0,71 g des Imprägniermittels aufgenommen hatte, was einem Produktverbrauch von nur ca. 74 g/$m^2$ entspricht. Nach 2 Wochen Lagerzeit im Labor (Reaktionszeit) wurden Wasseraufnahme und Eindringtiefe des Imprägniermittels im Vergleich zu einer nicht behandelten Platte bestimmt.
Die Reduktion der Wasseraufnahme betrug ca. 91 %, die Platte wies eine Eindringtiefe von ca. 2 mm auf.

## Beispiel 6

Applikation eines Antigraffitiimprägniermittels durch luftgestützte Sprühtechnik im Mehrschrittverfahren

Ein Betonwerkstein (Verbundpflasterstein nach DIN 18 503) wurde mittels HVLP-Sprühgerät mit einer Antigraffitilösung, beschrieben in EP 1 101 787 gemäß Beispiel 1, in einer Weise imprägniert, dass ein Produktverbrauch von ca. 150 g/$m^2$ resultierte. Die Oberfläche des Steins trocknete im Labor innerhalb von ca. 2 Stunden. Anschließend wurde auf die trockene Oberfläche die nächste Imprägnierung mittels HVLP-Gerät in einer Weise aufgetragen, dass ein Produktverbrauch von 65 g/$m^2$ resultierte. Nach einer Stunde Wartezeit war die Oberfläche des Steins trocken, und es wurde die nächste Imprägnierung mit einem Produktverbrauch von ca. 40 g/$m^2$ appliziert. Der Gesamtproduktverbrauch betrug damit ca. 255 g/$m^2$ bei einer Gesamtdauer der Applikation von ca. 3 Stunden. Nach einer Woche Wartezeit wurde ein Antigraffiti-Funktionstest durchgeführt. Hierzu wurde der Stein nach oben genannter Prüfnorm mit Farben behandelt und danach mit einem handelsüblichen Graffitireiniger (Krautol Uniabbeizer) gereinigt. Bitumenfarbe wurde mit Durrotech Graffiti-Clean 25 Bitumenreiniger entfernt. Die Wirksamkeit der Imprägnierung war hervorragend. Es wurde ein Ci-Wert von 100 erreicht.

## Beispiel 7 (Vergleichsbeispiel)

Applikation eines Antigraffitiimprägniermittels im Mehrschrittkombinationsverfahren: Flutverfahren / Airlesssprühverfahren

Ein Betonwerkstein (Verbundpflasterstein nach DIN 18 503) wurde im Flutverfahren mit einer Antigraffitilösung, beschrieben in EP 1 101 787 gemäß Beispiel 1, die vorher im Verhältnis 1 Teil Antigraffitilösung + 14 Teile Wasser verdünnt wurde, behandelt. Es resultierte ein Produktverbrauch von ca. 415 g/$m^2$ (entsprechend 28 g Antigraffiti-Konzentrat). Die Oberfläche des Steins trocknete im Labor innerhalb von ca. 4 Stunden. Anschließend wurde die nächste Imprägnierung auf die abgetrocknete Oberfläche mit unverdünntem Antigraffitimittel mittels einem einer Birchmeierspritze entsprechenden Sprühgerät (Gloria Feinsprüher Floretta Kombi) in einer Weise aufgetragen, dass ein Produktverbrauch von 200 g/$m^2$ resultierte. Um einen homogenen Flüssigkeitsfilm zu erreichen, musste mit einem Pinsel das aufgesprühte Produkt in die Oberfläche eingearbeitet werden. Nach zwei Stunden Wartezeit war die Oberfläche des Steins trocken, und es wurde die nächste Imprägnierung mit einem Produktverbrauch von ca. 163 g/$m^2$ appliziert. Wiederum war das Einarbeiten mittels Pinsel erforderlich. Um gleiche Performance im Antigraffiti-Funktionstest zu erreichen wie in Beispiel 6, war nach 2 Stunden Wartezeit ein weiterer Imprägniergang notwendig mit einem Produktverbrauch von 133 g/$m^2$. Der Gesamtproduktverbrauch betrug damit ca. 524 g/$m^2$ bei einer Gesamtdauer der Applikation von ca. 8,5 Stunden. Nach einer Woche Wartezeit wurde ein Antigraffiti-Funktionstest durchgeführt. Hierzu wurde der Stein nach oben genannter Prüfnorm mit Farben behandelt und danach mit einem handelsüblichen Graffitireiniger (Krautol Uniabbeizer / Durrotech Graffiti-Clean 25 Bitumenreiniger) gereinigt. Die Wirksamkeit der Imprägnierung war hervorragend. Es wurde ein Ci-Wert von 100 erreicht.

## Patentansprüche

1. Verfahren zur Imprägnierung poröser mineralischer Substrate durch HVLP-oder LVLP-Sprühtechnik, in dem man ein gasgestütztes Sprühaggregat einsetzt, welches aus (i) einem Düsensystem, (ii) einer Gaskomprimiereinheit und einer Regulierungseinheit für den Gasdruck bzw. die Gasmenge und (iii) einer Bevorratungseinheit für ein flüssiges Imprägniermittel und einer Flüssigkeitsfördereinheit sowie -reguliereinheit, besteht, wobei eine Verbindung von (ii) nach (i) zur Gasförderung und von (iii) nach (i) eine Verbindung zur Versorgung des Düsensystems mit Flüssigkeit bestehen, man in der Einheit (ii) als Gas Luft verwendet_und man das gasgestützte Sprühaggregat in einem Druckbereich von ≤ 2 bar Überdruck gegen Atmosphärendruck betreibt.

2. Verfahren nach Anspruch 1,
**dadurch gekennzeichnet,**
**dass** zur Erzeugung des Sprühstrahls ein Düsensystem bestehend aus einer oder mehreren Düsen verwendet wird, wobei komprimierte Luft in das Düsensystem zur Zerstäubung des flüssigen Imprägniermittels eingespeist wird.

3. Verfahren nach Anspruch 2,
**dadurch gekennzeichnet,**
**dass** man den Düseninnendruck auf ≤ 2 bar Überdruck gegen Atmosphärendruck einstellt.

4. Verfahren nach einem der Ansprüche 1 bis 3,
**dadurch gekennzeichnet,**
**dass** man Düsen mit einem Düsendurchmesser ≤ 4 mm einsetzt.

5. Verfahren nach einem der Ansprüche 1 bis 4,
**dadurch gekennzeichnet,**
**dass** man den Flüssigkeitsstrom, ausgehend von (iii), durch ein Regulierventil einstellt.

6. Verfahren nach einem der Ansprüche 1 bis 5,
**dadurch gekennzeichnet,**
**dass** man die Luftzufuhr durch ein Regulierventil der Einheit (ii) einstellt.

7. Verfahren nach einem der Ansprüche 1 bis 6,
**dadurch gekennzeichnet,**
**dass** man zur Einstellung des Luftstroms der Einheit (ii) einen Kompressor verwendet.

8. Verfahren nach Anspruch 7,
**dadurch gekennzeichnet,**
**dass** der Kompressor eine konstante Luftleistung erzeugt.

9. Verfahren nach Anspruch 7,
**dadurch gekennzeichnet,**
**dass** der Kompressor eine variable Luftleistung erzeugt.

10. Verfahren nach einem der Ansprüche 7 bis 9,
**dadurch gekennzeichnet,**
**dass** der Kompressor der Einheit (ii) eine Luftleistung von ≥ 100 l/min erzeugt.

11. Verfahren nach Anspruch 10,
**dadurch gekennzeichnet,**
**dass** der Kompressor pro Düse des Düsensystems (i) eine Luftleistung ≥ 100 l/min erzeugt.

12. Verfahren nach einem der Ansprüche 1 bis 11,
**dadurch gekennzeichnet,**
**dass** das Düsensystem (i) in Sprührichtung automatisiert über die zu imprägnierende Oberfläche geführt wird.

13. Verfahren nach einem der Ansprüche 1 bis 12,
**dadurch gekennzeichnet,**
**dass** man als Imprägniermittel ein flüssiges Hydrophobiermittel und/oder Oleophobiermittel einsetzt.

**14.** Verfahren nach einem der Ansprüche 1 bis 13,
**dadurch gekennzeichnet,**
**dass** das eingesetzte Imprägniermittel mindestens eine siliciumorganische Verbindung enthält.

**15.** Verfahren nach Anspruch 14,
**dadurch gekennzeichnet,**
**dass** man als siliciumorganische Verbindung mindestens ein monomeres Silan der allgemeinen Formel

$$R^1\text{-}Si(R^2)_a(OR^3)_{3\text{-}a} \qquad (I),$$

worin $R^1$ und $R^2$ gleich oder verschieden sind und jeweils eine lineare oder verzweigte Alkylgruppe mit 1 bis 20 C-Atomen, die teilweise oder vollständig mit Halogen substituiert sein können, oder eine Arylgruppe oder Aralkylgruppe mit linearer oder verzweigter Alkylkette darstellen, $R^3$ für eine Methyl-, Ethyl-, n-Propyl-, i-Propyl-, n-Butyl, i-Butyl- oder t-Butylgruppe steht und a gleich 0 oder 1 oder 2 ist,
einsetzt.

**16.** Verfahren nach Anspruch 15,
**dadurch gekennzeichnet,**
**dass** man n-Propyltrimethoxysilan, n-Propyltriethoxysilan, n-Butyltrimethoxysilan, n-Butyltriethoxysilan, i-Butyltrimethoxysilan, i-Butyltriethoxysilan, n-Hexyltrimethoxysilan, n-Hexyltriethoxysilan, i-Hexyltrimethoxysilan, i-Hexyltriethoxysilan, n-Octyltrimethoxysilan, n-Octyltriethoxysilan, i-Octyltrimethoxysilan, i-Octyltriethoxysilan, Chlorpropyltrimethoxysilan, Chlorpropyltriethoxysilan, 1,1,2,2-Tetrahydrotridecafluoroctyltrimethoxysilan, 1,1,2,2-Tetrahydrotridecafluoroctyltriethoxysilan oder ein Gemisch aus mindestens zwei dieser Silane einsetzt.

**17.** Verfahren nach Anspruch 14,
**dadurch gekennzeichnet,**
**dass** man als siliciumorganische Verbindung mindestens ein Siloxan einsetzt, das durch Hydrolyse und Kondensation von einem oder mehreren Silanen, wie sie den Ansprüchen 16 und 17 zu entnehmen sind, erhältlich ist.

**18.** Verfahren nach Anspruch 14 oder 17,
**dadurch gekennzeichnet,**
**dass** man als siliciumorganische Verbindung mindestens ein Siloxan gemaß einem Oligomerengemisch von n-Propylethoxysiloxanen, das 80 bis 100 Gew.-% an n-Propylethoxysilanen enthält, welche einen Oligomerisierungsgrad von 2 bis 6 aufweisen, oder gemäß einem Oligomerengemisch kettenförmig und/oder cyclisch kondensierten Alkylalkoxysilane, wobei dieses weniger als 2 Gew.-% an freien Alkoholen enthält und die kondensierten Alkoxysilane der allgemeinen Formel I

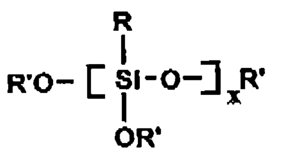 (I),

worin R eine Alkylgruppe mit 3 bis 18 C-Atomen darstellt, R' einen Methylrest oder einen Ethylrest oder ein Wasserstoffatom sowie einen Methylrest oder ein Wasserstoffatom sowie einen Ethylrest darstellt der Oligomerisierungsgrad im Bereich von $2 \leq x \leq 20$ liegt und der Quotient aus dem molaren Verhältnis [Si Alkoxy-Gruppierung] $\geq 1$ ist. und/oder der allgemeinen Formel II

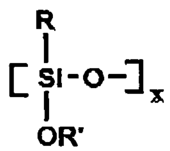

worin R eine Alkylgruppe mit 3 bis 18 C-Atomen darstellt R' einen Methylrest oder einen Ethylrest oder ein Wasserstoffatom sowie einen Methylrest oder ein Wasserstoffatom sowie einen Ethylrest darstellt, der Oligomerisierungsgrad mit $x \geq 3$ ist und der Quotient aus dem molaren Verhältnis [Si Alkoxy-Gruppierung] $\geq 1$ ist, genügen. einsetzt.

**19.** Verfahren nach einem der Ansprüche 14 bis 18,
**dadurch gekennzeichnet,**
**dass** man als siliciumorganische Verbindung ein Gemisch aus Silanen und Siloxanen einsetzt.

**20.** Verfahren nach einem der Ansprüche 14 bis 19,
**dadurch gekennzeichnet,**
**dass** man als Siliciumverbindungen enthaltendes Imprägniermittel Silane gemäß Formel I und/oder Siloxane als solche, mit einem Gehalt an Alkohol von weniger als 5 Gew.-%, bevorzugt mit weniger als 2 Gew.-% Alkohol, besonders bevorzugt mit weniger als 1 Gew.-% Alkohol, einsetzt.

**21.** Verfahren nach Anspruch 14,
**dadurch gekennzeichnet,**
**dass** man als Imprägniermittel Siliconimprägniermittel einsetzt.

**22.** Verfahren nach einem der Ansprüche 14 bis 21,
**dadurch gekennzeichnet,**
**dass** man als Imprägniermittel eine niedrig- bis hochviskose Zusammensetzung, die im Wesentlichen Silane, Siloxane und/oder Silicone enthält, einsetzt.

**23.** Verfahren nach einem der Ansprüche 14 bis 22,
**dadurch gekennzeichnet,**
**dass** man als Imprägniermittel ein Antigraffitiimprägniermittel einsetzt.

**24.** Verfahren nach Anspruch 23,
**dadurch gekennzeichnet,**
**dass** das Antigraffitiimprägniermittel Fluorpolymere enthält.

**25.** Verfahren nach Anspruch 24,
**dadurch gekennzeichnet,**
**dass** die Fluorpolymeren reaktive Gruppen aufweisen, die mit dem mineralischen Untergrund in Wechselwirkung treten können.

**26.** Verfahren nach einem der Ansprüche 23 bis 25,
**dadurch gekennzeichnet,**
**dass** das Antigraffitiimprägniermittel mindestens einen Wirkstoff enthält, der auf einem triaminoalkyl- und fluoralkylfunktionellen Oroganosiloxan oder einem Gemisch solcher Organosiloxane basiert, wobei diese durch mindestens eine Triaminogruppe der allgemeinen Formel I

$$[NH_x(CH_2)_aNH_y(CH_2)_bNH_z]- \qquad (I),$$

wobei diese über mindestens eine N-gebundene Alkylengruppe mit 1 bis 4 C-Atomen an mindestens ein Siliciumatom gebunden ist, a und b gleich oder verschieden sind und eine ganze Zahl von 1 bis 6 darstellen, x gleich 0 oder 1 oder 2 ist y gleich 0 oder 1 ist, z gleich 0 oder 1 oder 2 ist und der Maßgabe $(x+y+z) \leq 4$, und mindestens eine Si-C-gebundene Fluoralkylgruppe der allgemeinen Formel II

$$F_3C(CF_2)_r(CH_2)_s - \qquad (II),$$

worin r eine ganze Zahl von 0 bis 18 darstellt und s gleich 0 oder 2 ist. **gekennzeichnet** sind,
oder wobei das Mittel (Zuammensetzung) mindestens ein hydroxygruppen- und/oder alkoxygruppenhaltiges Organosiloxan und Wasser enthält, wobei das Organosiloxan mindestens eine Triaminogruppe der allgemeinen Formel 1

$$[NH_x(CH_2)_aNH_y(CH_2)_bNH_z]- \qquad (I)$$

wobei diese über mindestens eine N-gebundene Alkylengruppe mit 1 bis 4 C-Atomen an mindestens ein Siliciumatom gebunden ist, a und b gleich oder verschieden sind und eine ganze Zahl von 1 bis 6 darstellen, x gleich 0 oder 1 oder 2 ist, y gleich 0 oder 1 ist, z gleich 0 oder 1 oder 2 ist und der Maßgabe $(x+y+z) \leq 4$,
und mindestens eine Si-C-gebundene Fluoralkylgruppe der allgemeinen Formel II

$$F_3C(CF_2)_r(CH_2)_s - \qquad (II),$$

worin r eine ganze Zahl von 0 bis 18 darstellt und s gleich 0 oder 2 ist, trägt,
oder wobei ein solches Mittel (Zusammensetzung) erhältlich ist, indem man

i) mindestens ein Aminoalkylalkoxysilan der allgemeinen Formel IIIa

$$NH_2(CH_2)_2NH(CH_2)_2NH(CH_2)_3Si(R')_j(OR)_{(3-i)}, \qquad (IIIa),$$

worin R und R' gleich oder verschieden sind und eine lineare oder verzweigte Alkylgruppe mit 1 bis 4 C-Atomen darstellen und j gleich 0 oder 1 ist.
und/oder
der allgemeinen Formel IIIb

$$[NH_2(CH_2)_2]_2N(CH_2)_3Si(R')_k(OR)_{(3-k)} \qquad (IIIb),$$

worin R und R' gleich oder verschieden sind und eine lineare oder verzweigte Alkylgruppe mit 1 bis 4 C-Atomen darstellen und k gleich 0 oder 1 ist,
und/oder
ein "Bisprodukt" oder ein Gemisch von Bisprodukten" der allgemeinen Formel IIIc

$$[NH_x(CH_2)_aNH_y(CH_2)_bNH_z]\cdot[(CH_2)_cSi(R')_d(OR)_{(3-d)}]_e \qquad (IIIc),$$

worin R und R' gleich oder verschieden sind und eine lineare oder verzweigte Alkylgruppe mit 1 bis 4 C-Atomen darstellen, a eine ganze Zahl von 1 bis 6 darstellt, b gleich 1, 2, 3, 4, 5 oder 6 ist, c gleich 1, 2, 3 oder 4 ist, d gleich 0 oder 1 ist, e gleich 1, 2, 3, 4 oder 5 ist, x gleich 0 oder 1 oder 2 ist, gleich 0 oder 1 ist, z gleich 0 oder 1 oder 2 ist und der Maßgabe $(x+y+z) \leq 4$, wobei e für den Fall $(x+y+z) = 0$ den Zahlenwert 5 annimmt, für $(x+y+z) = 1$ ist $e = 4$, für $(x+y+z) = 2$ ist $e = 3$, für $(x+y+z) = 3$ ist $e = 2$ und für den Fall $(x+y+z) = 4$ ist $e = 1$,
und
ii) mindestens ein Fluoralkylalkoxysilan der allgemeinen Formel IV

$$F_3C(CF_2)_r(CH_2)_sSi(R'')_t(OR)_{(3-t)} \qquad (IV),$$

worin r eine ganze Zahl von 0 bis 18 darstellt, s gleich 0 oder 2 und t gleich 0 oder 1 sind, R und R" gleich oder verschieden sind und eine lineare oder verzweigte Alkyl-Gruppe mit 1 bis 4 C-Atomen darstellen,
mischt, Wasser oder ein Wasser/Alkoholaemisch zugibt, reagieren läßt und den Alkohol vollständig oder teilweise entfernt.

**27.** Verfahren nach einem der Ansprüche 14 bis 26,
**dadurch gekennzeichnet,**
**dass** man die Wirkstoffe Silan, Siloxan und/oder Silicon ohne weitere Verdünnung auf die zu behandelnden Oberflächen aufbringt.

**28.** Verfahren nach einem der Ansprüche 1 bis 27,
**dadurch gekennzeichnet,**
**dass** es sich bei dem zu behandelnden mineralischen Substrat um Faserzement, Beton, Sandstein, Kalkstein, Naturstein, Glas- und Mineralwolleartikel, Ziegel, Kunststein, Mörtel, Putz, Terrakotta, Keramik, Kalksandstein, zement- oder tongebundene Baustoffe handelt.

**29.** Verfahren nach einem der Ansprüche 1 bis 28,
**dadurch gekennzeichnet,**
**dass** das zu behandelnde poröse Substrat im trockenen Zustand mehr als 200 g/m$^2$ Wasser aufnehmen kann, wenn man einen entsprechenden Prüfkörper 1 Mal 5 Sekunden in Wasser taucht.

**30.** Verfahren nach einem der Ansprüche 1 bis 29,
**dadurch gekennzeichnet,**
**dass** man einen oder mehr als einen Applikationsgang durchführt.

**31.** Verfahren nach einem der Ansprüche 30,
**dadurch gekennzeichnet,**
**dass** pro Applikationsgang zwischen 1 und 200 $g/m^2$ Imprägniermittel aufgetragen werden.

**32.** Verfahren nach einem der Ansprüche 30, 31,
**dadurch gekennzeichnet,**
**dass** man im ersten Applikationsgang Imprägniermittel in einer Menge von 10 bis 300 $g/m^2$ und in den Folgeimprägnierungen Auftragsmengen von 1 bis 150 $g/m^2$ appliziert.

**33.** Verfahren nach Anspruch 32,
**dadurch gekennzeichnet,**
**dass** man im ersten Applikationsgang Auftragsmengen von 10 bis 200 $g/m^2$ und in den Folgeimprägnierungen Auftragsmengen von 1 bis 100 $g/m^2$ appliziert.

**34.** Verfahren nach einem der Ansprüche 30 bis 33,
**dadurch gekennzeichnet,**
**dass** man im ersten Applikationsgang Imprägniermittel mit einem Gehalt an Silanen, Siloxanen und/oder Siliconen von 95 bis 100 Gew.-% verwendet und bei den Folgeimprägnierungen ein Imprägniermittel, das 0,1 bis ≤ 100 Gew.-% Silane, Siloxane und/oder Silicone enthält oder das eine niedrigviskose bis hochviskose auf Siliciumverbindungen basierende wässrige Emulsion darstellt, einsetzt.

**35.** Verfahren nach einem der Ansprüche 1 bis 34,
**dadurch gekennzeichnet,**
**dass** ein weiterer Sprühvorgang auf den vorherigen nass in nass erfolgt.

**36.** Verfahren nach einem der Ansprüche 1 bis 34,
**dadurch gekennzeichnet,**
**dass** zwischen den Sprühapplikationen eine Trockenzeit eingehalten wird, welche ausreicht, dass die zu imprägnierende Oberfläche oberflächlich trocken aussieht.

**37.** Verwendung eines Sprühaggregats für die Imprägnierung poröser mineralischer Substrate mit einem Imprägniermittel, das als Wirkstoff eine Siliciumverbindung enthält, nach einem der Ansprüche 1 bis 36, wobei das Sprühaggregat nach der HVLP-oder LVLP-Technik arbeitet und auf (i) einem Düsensystem, (ii) einer Gaskomprimiereinheit und einer Regulierungseinheit für den Gasdruck bzw. die Gasmenge und (iii) einer Bevorratungseinheit für ein flüssige Imprägniermittel und einer Flüssigkeitsfördereinheit sowie - reguliereinhek basiert, wobei eine Verbindung von (ii) nach (i) zur Gasförderung und von (iii) nach (i) eine Verbindung zur Versorgung des Düsensystems mit Flüssigkeit bestehen, man in der Einheit (ii) als Gas Luft verwendet und man das gasgestützte Sprühaggregat in einem Druckbereich von ≤ 2 bar ü. betreibt.

**38.** Verwendung nach Anspruch 37 für den Bautenschutz.

**39.** Verwendung nach Anspruch 37 oder 38 für Antigraffitianwendungen.

## Claims

**1.** Process for impregnating porous mineral substrates by an HVLP or LVLP spraying technique, in which use is made of a gas-supported spraying assembly composed of (i) a nozzle system, and of (ii) a gas-compression unit, and of a regulating unit for the gas pressure or for the amount of gas, and of (iii) a storage unit for a liquid impregnating agent and of a liquid-conveying unit and liquid-regulating unit, there being a connection from (ii) to (i) for conveying gas, and a connection from (iii) to (i) for supplying the nozzle system with liquid, air being used as gas in the unit (ii) and the gas-supported spraying assembly being operated within the pressure range ≤ 2 bar above atmospheric pressure.

2. Process according to Claim 1,
**characterized in that**
to generate the spray jet, use is made of a nozzle system composed of one or more nozzles, compressed air being fed into the nozzle system to atomize the liquid impregnating agent.

3. Process according to Claim 2,
**characterized in that**
the internal nozzle pressure is set to ≤ 2 bar above atmospheric pressure.

4. Process according to any of Claims 1 to 3,
**characterized in that**
use is made of nozzles whose diameter ≤ 4 mm.

5. Process according to any of Claims 1 to 4,
**characterized in that**
a regulating valve is used to adjust the liquid stream emanating from (iii).

6. Process according to any of Claims 1 to 5,
**characterized in that**
a regulating valve of the unit (ii) is used to adjust the air feed.

7. Process according to any of Claims 1 to 6,
**characterized in that**
a compressor is used to adjust the air stream from the unit (ii).

8. Process according to Claim 7,
**characterized in that**
the compressor generates a constant air supply.

9. Process according to Claim 7,
**characterized in that**
the compressor generates a variable air supply.

10. Process according to any of Claims 7 to 9,
**characterized in that**
the compressor of the unit (ii) generates an air supply of ≥ 100 l/min.

11. Process according to Claim 10,
**characterized in that**
the compressor generates an air supply of ≥ 100 l/min per nozzle of the nozzle system (i).

12. Process according to any of Claims 1 to 11,
**characterized in that**
the nozzle system (i) is guided in the direction of spraying automatically over the surface to be impregnated.

13. Process according to any of Claims 1 to 12,
**characterized in that**
a liquid hydrophobicizing agent and/or oleophobicizing agent is used as impregnating agent.

14. Process according to any of Claims 1 to 13,
**characterized in that**
the impregnating agent used comprises at least one organosilicon compound.

15. Process according to Claim 14,
**characterized in that**
at least one monomeric silane of the general formula I

$$R^1\text{-}Si(R^2)_a(OR^3)_{3-a} \qquad (I)$$

is used as organosilicon compound, where $R^1$ and $R^2$ are identical or different, and each is a linear or branched alkyl group having from 1 to 20 carbon atoms, where these can have partial or full halogen substitution, or an aryl group or aralkyl group having a linear or branched alkyl chain, $R^3$ is a methyl, ethyl, n-propyl, isopropyl, n-butyl, isobutyl, or tert-butyl group, and a is 0, 1 or 2.

**16.** Process according to Claim 15,
**characterized in that**
use is made of n-propyltrimethoxysilane, n-propyltriethoxysilane, n-butyltrimethoxysilane, n-butyltriethoxysilane, isobutyltrimethoxysilane, isobutyltriethoxysilane, n-hexyltrimethoxysilane, n-hexyltriethoxysilane, isohexyltrimethoxysilane, isohexyltriethoxysilane, n-octyltrimethoxysilane, n-octyltriethoxysilane, isooctyltrimethoxysilane, isooctyltriethoxysilane, chloropropyltrimethoxysilane, chloropropyltriethoxysilane, 1,1,2,2-tetrahydrotridecafluorooctyltrimethoxysilane, 1,1,2,2-tetrahydrotridecafluorooctyltriethoxysilane, or a mixture of at least two of these silanes.

**17.** Process according to Claim 14,
**characterized in that**
use is made, as organosilicon compound, of at least one siloxane which is obtainable by hydrolysis and condensation of one or more silanes as found in Claims 15 and 16.

**18.** Process according to Claim 14 or 17,
**characterized in that**
use is made, as organosilicon compound, of at least one siloxane which is an oligomer mixture of n-propylethoxysiloxanes, which comprises from 80 to 100% by weight of n-propylethoxysilanes which have a degree of oligomerization of from 2 to 6, or which is an oligomer mixture of alkylalkoxysilanes condensed in the form of a chain and/or cyclically, where this mixture comprises less than 2% by weight of free alcohols, and the condensed alkoxysilanes of the general formula I

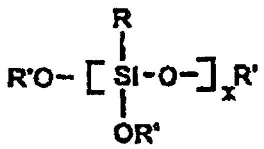 (I).

in which R is an alkyl group having from 3 to 18 carbon atoms, R' is a methyl moiety or an ethyl moiety or a hydrogen atom and a methyl moiety or a hydrogen atom and an ethyl moiety, the degree of oligomerization is in the range $2 \leq \times \leq 20$, and the quotient representing the molar ratio [Si/alkoxy group] is $\geq 1$,
and/or of the general formula II

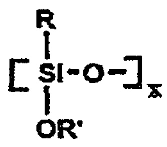

in which R is an alkyl group having from 3 to 18 carbon atoms, R' is a methyl moiety or an ethyl moiety or a hydrogen atom and a methyl moiety or a hydrogen atom and an ethyl moiety, the degree of oligomerization x is $\geq 3$, and the quotient representing the molar ratio [Si/alkoxy group] is $\geq 1$.

**19.** Process according to any of Claims 14 to 18,
**characterized in that**
use is made, as organosilicon compound, of a mixture of silanes and siloxanes.

**20.** Process according to any of Claims 14 to 19,
**characterized in that**

use is made, as impregnating agent comprising silicon compounds, of silanes of formula I and/or siloxanes undiluted, with less than 5% by weight content of alcohol, preferably with less than 2% by weight of alcohol, particularly preferably with less than 1% by weight of alcohol.

**21.** Process according to Claim 14,
**characterized in that**
silicone impregnating agent is used as impregnating agent.

**22.** Process according to any of Claims 14 to 21,
**characterized in that**

use is made, as impregnating agent, of a low- to high-viscosity composition which is substantially composed of silanes, of siloxanes, and/or of silicones.

**23.** Process according to any of Claims 14 to 22,
**characterized in that**
an antigraffiti impregnating agent is used as impregnating agent.

**24.** Process according to Claim 23,
**characterized in that**
the antigraffiti impregnating agent comprises fluoropolymers.

**25.** Process according to Claim 24,
**characterized in that**
the fluoropolymers have reactive groups which can interact with the mineral substrate.

**26.** Process according to any of Claims 23 to 25,
**characterized in that**
the antigraffiti impregnating agent comprises at least one active ingredient which is based on a triaminoalkyl- and fluoroalkyl-functional organosiloxane or on a mixture of such organosiloxanes, where these are **characterized by** at least one triamino group of the general formula I

$$[NH_x(CH_2)_aNH_y(CH_2)_bNH_z]- \quad (I),$$

where this has bonding to at least one silicon atom by way of at least one N-bonded alkylene group having from 1 to 4 carbon atoms, a and b are identical or different and are a whole number from 1 to 6, x is 0 or 1 or 2, y is 0 or 1, z is 0 or 1 or 2, with the proviso that $(x+y+z) \leq 4$, and by at least one Si-C-bonded fluoroalkyl group of the general formula II

$$F_3C(CF_2)_r(CH_2)_s \quad (II),$$

in which r is a whole number from 0 to 18 and s is 0 or 2,
or where the composition comprises at least one hydroxylated and/or alkoxylated organosiloxane and water, where the organosiloxane bears at least one triamino group of the general formula I

$$[NH_x(CH_2)_aNH_y(CH_2)_bNH_z] - \quad (I),$$

where this has bonding to at least one silicon atom by way of at least one N-bonded alkylene group having from 1 to 4 carbon atoms, a and b are identical or different and are a whole number from 1 to 6, x is 0 or 1 or 2, y is 0 or 1, z is 0 or 1 or 2, with the proviso that $(x+y+z) \leq 4$,
and by at least one Si-C-bonded fluoroalkyl group of the general formula II

$$F_3C(CF_2)_r(CH_2)_s \quad (II),$$

in which r is a whole number from 0 to 18 and s is 0 or 2,
or where a composition of this type is obtainable by mixing

i) at least one aminoalkylalkoxysilane of the general formula IIIa

$$NH_2(CH_2)_2NH(CH_2)_2NH(CH_2)_3Si(R')_j(OR)_{(3-j)} \quad (IIIa),$$

in which R and R' are identical or different, being a linear or branched alkyl group having from 1 to 4 carbon atoms, and j is 0 or 1,
and/or
of the general formula IIIb

$$[NH_2(CH_2)_2]_2N(CH_2)_3Si(R')_k(OR)_{(3-k)} \quad (IIIb),$$

in which R and R' are identical or different, being a linear or branched alkyl group having from 1 to 4 carbon atoms, and k is 0 or 1,
and/or
a "bis product" or a mixture of "bis products" of the general formula IIIc

$$(NH_x(CH_2)_aNH_y(CH_2)_bNH_z]\cdot[(CH_2)_cSi(R')_d(OR)_{(3-d)}]_e \quad (IIIc),$$

in which R and R' are identical or different, being a linear or branched alkyl group having from 1 to 4 carbon atoms, a is a whole number from 1 to 6, b is 1, 2, 3, 4, 5 or 6, c is 1, 2, 3 or 4, d is 0 or 1, e is 1, 2, 3, 4 or 5, x is 0 or 1 or 2, y is 0 or 1, z is 0 or 1 or 2, with the proviso that $(x+y+z) \leq 4$, where e assumes the numerical value 5 if $(x+y+z) = 0$, e = 4 if $(x+y+z) = 1$, e = 3 if $(x+y+z) = 2$, e = 2 if $(x+y+z) = 3$ and e = 1 if $(x+y+z) = 4$,
and
ii) at least one fluoroalkylalkoxysilane of the general formula IV

$$F_3C(CF_2)_r(CH_2)_sSi(R'')_t(OR)_{(3-t)} \quad (IV),$$

in which r is a whole number from 0 to 18, s is 0 or 2, and t is 0 or 1, and R and R'' are identical or different, being a linear or branched alkyl group having from 1 to 4 carbon atoms,
adding water or a water/alcohol mixture, permitting the reaction to proceed, and removing some or all of the alcohol.

**27.** Process according to any of Claims 14 to 26,
**characterized in that**
the active ingredients silane, siloxane, and/or silicone are applied without further dilution to the surfaces to be treated.

**28.** Process according to any of Claims 1 to 27,
**characterized in that**
the mineral substrate to be treated is fiber-filled concrete, concrete, sandstone, limestone, natural stone, glass wool items, mineral wool items, bricks, artificial stone, mortar, render, terracotta, ceramic, calcium silicate brick, or cement- or clay-bound construction materials.

**29.** Process according to any of Claims 1 to 28,
**characterized in that**
the porous substrate to be treated can, in the dry state, absorb more than 200 $g/m^2$ of water when a corresponding test specimen is dipped once into water for 5 seconds.

**30.** Process according to any of Claims 1 to 29,
**characterized in that**
one or more application passes are executed.

**31.** Process according to Claim 30,
**characterized in that**
from 1 to 200 $g/m^2$ of impregnating agent are applied per application pass.

**32.** Process according to either of Claims 30, 31,
**characterized in that**
the amount of impregnating agent applied in the first application pass is from 10 to 300 $g/m^2$, and in the following impregnations the amounts applied are from 1 to 150 $g/m^2$.

**33.** Process according to Claim 32,
**characterized in that**
the amounts applied in the first application pass are from 10 to 200 $g/m^2$, and the amounts applied in the following impregnations are from 1 to 100 $g/m^2$.

**34.** Process according to any of Claims 30 to 33,
**characterized in that**
the first application pass uses an impregnating agent with from 95 to 100% by weight content of silanes, of siloxanes, and/or of silicones, and the following impregnations use an impregnating agent which comprises from 0.1 to ≤ 100% by weight of silanes, of siloxanes, and/or of silicones, or which is a low- to high-viscosity aqueous emulsion based on silicon compounds.

**35.** Process according to any of Claims 1 to 34,
**characterized in that**
another spray procedure follows the previous procedure wet-on-wet.

**36.** Process according to any of Claims 1 to 34,
**characterized in that**
between the spray applications, a drying time is maintained and is sufficient for the surface to be impregnated to appear superficially dry.

**37.** Use of a spraying assembly for impregnating porous mineral substrates with an impregnating agent which comprises a silicon compound as active ingredient, according to any of Claims 1 to 36, where the spraying assembly uses the HVLP or LVLP technique and is based on (i) a nozzle system, and on (ii) a gas-compression unit, and on a regulating unit for the gas pressure or for the amount of gas, and on (iii) a storage unit for a liquid impregnating agent and on a liquid-conveying unit and liquid-regulating unit, there being a connection from (ii) to (i) for conveying gas, and a connection from (iii) to (i) for supplying the nozzle system with liquid, air being used as gas in the unit (ii) and the gas-supported spraying assembly being operated within the pressure range ≤ 2 bar gauge.

**38.** Use according to Claim 37 for the protection of buildings.

**39.** Use according to Claim 37 or 38 for antigraffiti applications.

## Revendications

**1.** Procédé pour l'imprégnation de substrats minéraux poreux par une technique de pulvérisation HVLP ou LVLP, dans lequel on utilise un appareil de pulvérisation soutenu par un gaz, qui est constitué par (i) un système de pulvérisateurs, (ii) une unité de compression de gaz et une unité de régulation pour la pression ou la quantité de gaz et (iii) une unité d'approvisionnement pour un agent d'imprégnation liquide et une unité de transport de liquide ainsi qu'une unité de régulation du liquide, où il existe un raccordement de (ii) vers (i) pour le transport du gaz et de (iii) vers (i) pour l'alimentation du système de pulvérisateurs en liquide, on utilise dans l'unité (ii) de l'air comme gaz et on exploite l'appareil de pulvérisation soutenu par un gaz dans une plage de pression présentant une surpression ≤ 2 bars par rapport à la pression atmosphérique.

**2.** Procédé selon la revendication 1, **caractérisé en ce que** pour produire le jet pulvérisé, on utilise un système de pulvérisation constitué par un ou plusieurs pulvérisateurs, où de l'air comprimé est injecté dans le système de pulvérisateurs pour vaporiser l'agent d'imprégnation liquide.

**3.** Procédé selon la revendication 2, **caractérisé en ce qu'**on règle la pression interne dans les pulvérisateurs à une surpression ≤ 2 bars par rapport à la pression atmosphérique.

**4.** Procédé selon l'une quelconque des revendications 1 à 3, **caractérisé en ce qu'**on utilise des pulvérisateurs avec un diamètre de pulvérisateur ≤ 4 mm.

**5.** Procédé selon l'une quelconque des revendications 1 à 4, **caractérisé en ce qu'**on règle le flux de liquide partant de (iii) par une soupape de régulation.

6. Procédé selon l'une quelconque des revendications 1 à 5, **caractérisé en ce qu'**on règle l'alimentation en air par une soupape de régulation de l'unité (ii).

7. Procédé selon l'une quelconque des revendications 1 à 6, **caractérisé en ce qu'**on utilise un compresseur pour le réglage du flux d'air de l'unité (ii).

8. Procédé selon la revendication 7, **caractérisé en ce que** le compresseur produit un débit d'air constant.

9. Procédé selon la revendication 7, **caractérisé en ce que** le compresseur produit un débit d'air variable.

10. Procédé selon l'une quelconque des revendications 7 à 9, **caractérisé en ce que** le compresseur de l'unité (ii) produit un débit d'air ≥ 100 l/min.

11. Procédé selon la revendication 10, **caractérisé en ce que** le compresseur produit un débit d'air ≥ 100 l/min par pulvérisateur du système de pulvérisateurs (i).

12. Procédé selon l'une quelconque des revendications 1 à 11, **caractérisé en ce que** le système de pulvérisateurs (i) est guidé dans le sens de la pulvérisation de manière automatisée sur la surface à imprégner.

13. Procédé selon l'une quelconque des revendications 1 à 12, **caractérisé en ce qu'**on utilise comme agent d'imprégnation un agent d'hydrofugation liquide et/ou un agent d'oléofugation liquide.

14. Procédé selon l'une quelconque des revendications 1 à 13, **caractérisé en ce que** l'agent d'imprégnation utilisé contient au moins un composé organosilicié.

15. Procédé selon la revendication 14, **caractérisé en ce qu'**on utilise comme composé organosilicié au moins un silane monomère de formule générale I

$$R^1\text{-Si}(R^2)_a(OR^3)_{3-a} \qquad (I),$$

dans laquelle $R^1$ et $R^2$ sont identiques ou différents et représentent à chaque fois un groupe alkyle linéaire ou ramifié, comprenant 1 à 20 atomes de carbone, qui peuvent être partiellement ou totalement substitués par halogène, ou un groupe aryle ou aralkyle avec une chaîne alkyle linéaire ou ramifiée, $R^3$ représente un groupe méthyle, éthyle, n-propyle, i-propyle, n-butyle, i-butyle ou t-butyle et a représente 0 ou 1 ou 2.

16. Procédé selon la revendication 15, **caractérisé en ce qu'**on utilise du n-propyltriméthoxysilane, du n-propyltriéthoxysilane, du n-butyltriméthoxysilane, du n-butyltriéthoxysilane, de l'i-butyltriméthoxysilane, de l'i-butyltriéthoxysilane, du n-hexyltriméthoxysilane, du n-hexyltriéthoxysilane, de l'i-hexyltriméthoxysilane, de l'i-hexyltriéthoxysilane, du n-octyltriméthoxysilane, du n-octyltriéthoxysilane, de l'i-octyltriméthoxysilane, de l'i-octyltriéthoxysilane, du chloropropyltriméthoxysilane, du chloropropyltriéthoxysilane, du 1,1,2,2-tétrahydrotridécafluorooctyltriméthoxysilane, du 1,1,2,2-tétrahydrotridécafluorooctyltriéthoxysilane ou un mélange d'au moins deux de ces silanes.

17. Procédé selon la revendication 14, **caractérisé en ce qu'**on utilise comme composé organosilicié au moins un siloxane qui est obtenu par hydrolyse et condensation d'un ou de plusieurs silanes, tels qu'ils sont indiqués dans les revendications 15 et 16.

18. Procédé selon la revendication 14 ou 17, **caractérisé en ce qu'**on utilise comme composé organosilicié au moins un siloxane, selon un mélange d'oligomères de n-propyléthoxysiloxanes, qui contient 80 à 100% en poids de n-propyléthoxysilanes, qui présentent un degré d'oligomérisation de 2 à 6, ou selon un mélange d'oligomères d'alkylalcoxysilanes condensés en forme de chaîne et/ou cycliquement, celui-ci contenant moins de 2% en poids d'alcools libres et les alcoxysilanes satisfaisant à la formule générale I

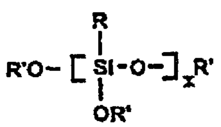

(I).

où R représente un groupe alkyle comprenant 3 à 18 atomes de carbone, R’ représente un radical méthyle ou un radical éthyle ou un atome d’hydrogène ainsi qu’un radical méthyle ou un atome d’hydrogène ainsi qu’un radical éthyle, le degré d’oligomérisation se situe dans la plage de $2 \leq x \leq 20$ et le quotient du rapport molaire [Si/groupe alcoxy] est $\geq 1$,
et/ou à la formule générale II

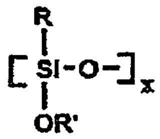

où R représente un groupe alkyle comprenant 3 à 18 atomes de carbone, R’ représente un radical méthyle ou un radical éthyle ou un atome d’hydrogène ainsi qu’un radical méthyle ou un atome d’hydrogène ainsi qu’un radical éthyle, le degré d’oligomérisation est de $x \geq 3$ et le quotient du rapport molaire [Si/groupe alcoxy] est $\geq 1$.

**19.** Procédé selon l’une quelconque des revendications 14 à 18, **caractérisé en ce qu’**on utilise comme composé organosilicié un mélange de silanes et de siloxanes.

**20.** Procédé selon l’une quelconque des revendications 14 à 19, **caractérisé en ce qu’**on utilise comme agent d’imprégnation contenant des composés siliciés des silanes selon la formule I et/ou des siloxanes tels quels, avec une teneur en alcool inférieure à 5% en poids, de préférence avec moins de 2% en poids d’alcool, de manière particulièrement préférée avec moins de 1% en poids d’alcool.

**21.** Procédé selon la revendication 14, **caractérisé en ce qu’**on utilise des agents d’imprégnation siliconés comme agent d’imprégnation.

**22.** Procédé selon l’une quelconque des revendications 14 à 21, **caractérisé en ce qu’**on utilise, comme agent d’imprégnation, une composition de viscosité faible à élevée, qui contient essentiellement des silanes, des siloxanes et/ou des silicones.

**23.** Procédé selon l’une quelconque des revendications 14 à 22, **caractérisé en ce qu’**on utilise un agent d’imprégnation anti-graffiti comme agent d’imprégnation.

**24.** Procédé selon la revendication 23, **caractérisé en ce que** l’agent d’imprégnation anti-graffiti contient des polymères fluorés.

**25.** Procédé selon la revendication 24, **caractérisé en ce** les polymères fluorés présentent des groupes réactifs qui peuvent entrer en interaction avec le substrat minéral.

**26.** Procédé selon l’une quelconque des revendications 23 à 25, **caractérisé en ce que** l’agent d’imprégnation anti-graffiti contient au moins une substance active, qui est à base d’un organosiloxane à fonctionnalité triaminoalkyle et fluoroalkyle ou d’un mélange de ces organosiloxanes, celui-ci étant **caractérisé par** au moins un groupe triamino de formule générale I

$$[NH_x(CH_2)_aNH_y(CH_2)_bNH_z]- \qquad (I)$$

où celui-ci est lié via au moins un groupe alkylène lié à N, comprenant 1 à 4 atomes de carbone, à au moins un atome de silicium et a et b sont identiques ou différents et représentent un nombre entier de 1 à 6, x est égal à 0 ou 1 ou 2, y est égal à 0 ou 1, z est égal à 0 ou 1 ou 2 et avec la condition que $(x + y + z) \leq 4$, et au moins un groupe fluoroalkyle lié par Si-C de formule générale II

$$F_3C(CF_2)_r(CH_2)_s- \qquad (II)$$

où r représente un nombre entier de 0 à 18 et s est égal à 0 ou 2,
ou l’agent (composition) contient au moins un organosiloxane contenant des groupes hydroxy et/ou alcoxy et de l’eau, où l’organosiloxane porte au moins un groupe triamino de formule générale I

$$[NH_x(CH_2)_aNH_y(CH_2)_bNH_z]- \quad (I),$$

où celui-ci est lié via au moins un groupe alkylène lié à N, comprenant 1 à 4 atomes de carbone, à au moins un atome de silicium et a et b sont identiques ou différents et représentent un nombre entier de 1 à 6, x est égal à 0 ou 1 ou 2, y est égal à 0 ou 1, z est égal à 0 ou 1 ou 2 et avec la condition que $(x + y + z) \leq 4$,
et au moins un groupe fluoroalkyle lié par Si-C de formule générale II

$$F_3C(CF_2)_r(CH_2)_s- \quad (II)$$

où r représente un nombre entier de 0 à 18 et s est égal à 0 ou 2,
ou un tel agent (composition) peut être obtenu en mélangeant

i) au moins un aminoalkylalcoxysilane de formule générale IIIa

$$NH_2(CH_2)_2NH(CH_2)_2NH(CH_2)_3Si(R')_j(OR)_{(3-j)} \quad (IIIa),$$

dans laquelle R et R' sont identiques ou différents et représentent un groupe alkyle linéaire ou ramifié comprenant 1 à 4 atomes de carbone et j est égal à 0 ou 1,
et/ou
de formule générale IIIb

$$[NH_2(CH_2)_2]_2N(CH_2)_3Si(R')_k\,(OR)_{(3-k)} \quad (IIIb)$$

dans laquelle R et R' sont identiques ou différents et représentent un groupe alkyle linéaire ou ramifié comprenant 1 à 4 atomes de carbone et k est égal à 0 ou 1,
et/ou
un "bi-produit" ou un mélange de "bi-produits" de formule générale IIIC

$$[NH_x(CH_2)_aNH_y(CH_2)_bNH_z]\bullet[(CH_2)_oSi(R')_d(OR)_{(3-d)}]_e \quad (IIIC),$$

dans laquelle R et R' sont identiques ou différents et représentent un groupe alkyle linéaire ou ramifié comprenant 1 à 4 atomes de carbone, a représente un nombre entier de 1 à 6, b est égal à 1, 2, 3, 4, 5 ou 6, c est égal à 1, 2, 3 ou 4, d est égal à 0 ou 1, e est égal à 1, 2, 3, 4 ou 5, x est égal à 0 ou 1 ou 2, y est égal à 0 ou 1, z est égal à 0 ou 1 ou 2 et avec la condition que $(x + y + z) \leq 4$, où e est égal à la valeur numérique 5 lorsque $(x + y + z) = 0$, e = 4 lorsque $(x + y + z) = 1$, e = 3 lorsque $(x + y + z) = 2$, e = 2 lorsque $(x + y + z) = 3$ et e = 1 lorsque $(x + y + z) = 4$,
et
ii) au moins un fluoroalkylalcoxysilane de formule générale IV

$$F_3C(CF_2)_r(CH_2)_sSi(R'')_t(OR)_{(3-t)} \quad (IV),$$

dans laquelle r représente un nombre entier de 0 à 18, s est égal à 0 ou 2 et t est égal à 0 ou 1, R et R" sont identiques ou différents et représentent un groupe alkyle linéaire ou ramifié comprenant 1 à 4 atomes de carbone, en ajoutant de l'eau ou un mélange eau/alcool, en laissant réagir et en éliminant l'alcool complètement ou partiellement.

**27.** Procédé selon l'une quelconque des revendications 14 à 26, **caractérisé en ce qu'**on applique les substances actives silane, siloxane et/ou silicone sans autre dilution sur les surfaces à traiter.

**28.** Procédé selon l'une quelconque des revendications 1 à 27, **caractérisé en ce qu'**il s'agit, pour le substrat minéral à traiter, de ciment fibreux, de béton, de grès, de calcaire, de pierre naturelle, d'objets en laine de verre et minérale, de tuiles, de pierre synthétique, de mortier, d'enduit, de Terracotta, de céramique, de brique silico-calcaire, de matériaux liés au ciment ou à l'argile.

**29.** Procédé selon l'une quelconque des revendications 1 à 28, **caractérisé en ce que** le substrat poreux à traiter peut, à l'état sec, absorber plus de 200 $g/m^2$ d'eau lorsqu'on immerge une éprouvette correspondante 1 fois pendant 5 secondes dans l'eau.

**30.** Procédé selon l'une quelconque des revendications 1 à 29, **caractérisé en ce qu'**on réalise un cycle d'application ou plus d'un cycle d'application.

**31.** Procédé selon la revendication 30, **caractérisé en ce qu'**on applique entre 1 et 200 g/$m^2$ d'agent d'imprégnation par cycle d'application.

**32.** Procédé selon l'une quelconque des revendications 30, 31, **caractérisé en ce qu'**on applique, lors du premier cycle d'application, l'agent d'imprégnation en une quantité de 10 à 300 g/$m^2$ et lors des imprégnations suivantes, on applique des quantités de 1 à 150 g/$m^2$.

**33.** Procédé selon la revendication 32, **caractérisé en ce qu'**on applique, lors du premier cycle d'application, des quantités de 10 à 200 g/$m^2$ et lors des imprégnations suivantes, on applique des quantités de 1 à 100 g/$m^2$.

**34.** Procédé selon l'une quelconque des revendications 30 à 33, **caractérisé en ce qu'**on utilise dans le premier cycle d'application des agents d'imprégnation présentant une teneur en silanes, siloxanes et/ou silicones de 95 à 100% en poids et lors des imprégnations suivantes un agent d'imprégnation qui contient 0,1 à ≤ 100% en poids de silanes, de siloxanes et/ou de silicones ou qui représente une émulsion aqueuse de viscosité faible à élevée à base de composés siliciés.

**35.** Procédé selon l'une quelconque des revendications 1 à 34, **caractérisé en ce qu'**un processus de pulvérisation consécutif est réalisé sur le précédent de manière humide sur humide.

**36.** Procédé selon l'une quelconque des revendications 1 à 34, **caractérisé en ce qu'**on respecte, entre les applications par pulvérisation, un temps de séchage qui suffit pour que la surface à imprégner présente un aspect sec en surface.

**37.** Utilisation d'un appareil de pulvérisation pour l'imprégnation de substrats poreux minéraux avec un agent d'imprégnation qui contient comme substance active un composé silicié, selon l'une quelconque des revendications 1 à 36, l'appareil de pulvérisation fonctionnant selon une technique de pulvérisation HVLP ou LVLP et étant à base (i) d'un système de pulvérisateurs, (ii) d'une unité de compression de gaz et d'une unité de régulation pour la pression ou la quantité de gaz et (iii) d'une unité d'approvisionnement pour un agent d'imprégnation liquide et d'une unité de transport de liquide ainsi que d'une unité de régulation de liquide, où il existe un raccordement de (ii) vers (i) pour le transport du gaz et de (iii) vers (i) pour l'alimentation du système de pulvérisateurs en liquide, on utilise dans l'unité (ii) de l'air comme gaz et on exploite l'appareil de pulvérisation soutenu par un gaz dans une plage de pression présentant une surpression ≤ 2 bars par rapport à la pression atmosphérique.

**38.** Utilisation selon la revendication 37 pour la protection des bâtiments.

**39.** Utilisation selon la revendication 37 ou 38 pour des utilisations anti-graffiti.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5565032 A
- DE OS1471299 A
- EP 1193302 A
- EP 1101787 A
- US 5799875 A
- US 5064119 A
- US 4744518 A
- US 4759502 A
- US 5050804 A
- EP 0814110 A
- EP 1205481 A
- EP 1205481 A2
- EP 1101787 A2
- EP 1193302 A2